# EUROPÄISCHE PATENTANMELDUNG

(11) **EP 4 648 397 A1**
(43) Veröffentlichungstag der Anmeldung: **12.11.2025**
(21) Anmeldenummer: 24174503.3
(22) Anmeldetag: 07.05.2024
(51) Int. Cl.: H04M 9/00, H04R 1/40, H04R 1/08, B41F 19/00

(54) **GEGENSPRECHANLAGE MIT STÖRGERÄUSCHUNTERDRÜCKUNG**

(71) Anmelder: Heidelberger Druckmaschinen AG, 69115 Heidelberg (DE)
(72) Erfinder: Lütke, Betram, 68766 Hockenheim (DE); Benzin, Ralf, 68199 Mannheim (DE); Laier, Raimund, 69234 Dielheim (DE); Wagner, Andreas, 76676 Graben Neudorf (DE); Kinast, Gregor, 01099 Dresden (DE); Freitag, Michael, 01159 Dresden (DE)

(57) **Zusammenfassung**

Die Erfindung betrifft eine Kommunikationseinrichtung für gleichzeitige bidirektionale Sprachkommunikation zwischen wenigstens zwei Sprechstellen (3) an einer Bedruckstoffe verarbeitenden Maschine, wobei die Sprechstellen (3) über ein Bussystem (4) miteinander verbunden sind. Die Erfindung zeichnet sich dadurch aus, dass jede Sprechstelle (3) wenigstens einen Lautsprecher (2) und eine Mikrofoneinrichtung (1) mit mehreren Mikrofonkapseln (6) sowie eine Leiterplatte (8) mit elektronischen Bauteilen zur Verbesserung der Sprachverständlichkeit bei der Sprachkommunikation zwischen den Sprechstellen (3) aufweist.

## Beschreibung

Die vorliegende Erfindung betrifft eine Kommunikationseinrichtung für gleichzeitige bidirektionale Sprachkommunikation zwischen zwei Sprechstellen an einer Bedruckstoffe verarbeitenden Maschine, wobei die Sprechstellen über ein Bussystem miteinander verbunden sind.

Eine derartige Kommunikationseinrichtung ist aus der Offenlegungsschrift DE 10 2007 058 708 A1 bekannt. Dort wird vorgeschlagen, über ein Bussystem mehrere Bedienstellen für eine gleichzeitige bidirektionale Sprachkommunikation an einer Druckmaschine vorzusehen. Über das Bussystem kann dabei nicht nur Sprachinformation zwischen den Bedienstellen ausgetauscht werden, das Bussystem dient auch der Übertragung von haptischen oder optischen Informationen, wie zum Abspielen von Videos.

Ausgehend vom Stand der Technik ist es Aufgabe der vorliegenden Erfindung, die bidirektionale gleichzeitige Sprachkommunikation zwischen zwei Sprechstellen an einer Bedruckstoffe verarbeitenden Maschine hinsichtlich der Sprachqualität bei der Übertragung der Sprachdaten zu verbessern.

Diese Aufgabe wird erfindungsgemäß durch Patentanspruch 1 gelöst. Vorteilhafte Ausgestaltungen der vorliegenden Erfindung ergeben sich aus den abhängigen Patentansprüchen, der Beschreibung und den Figuren. Die vorliegende Erfindung zeichnet sich dadurch aus, dass jede Sprechstelle wenigstens einen Lautsprecher und eine Mikrofoneinrichtung mit mehreren Mikrofonkapseln sowie eine Leiterplatte mit elektronischen Bauteilen zur Unterdrückung von Störgeräuschen bei der Sprachkommunikation zwischen den Sprechstellen aufweist. Durch diese konstruktiven Merkmale wird die Aufnahme von Sprache und damit die Sprachqualität zwischen zwei Sprechstellen einer Druckmaschine deutlich verbessert, da durch die mehreren Mikrofonkapseln in Verbindung mit der elektronischen Unterdrückung von Störgeräuschen der Sprachanteil deutlich besser zu verstehen ist und insbesondere beim Vollduplexsprachbetrieb Störungen wie Echos auf ein Minimum beschränkt werden. Dies ist insbesondere bei Sprechstellen an Druckmaschinen besonders wichtig, da Druckmaschinen im Betrieb einen ziemlich hohen Lärmpegel aufweisen und zudem die Sprechstellen an unterschiedlichen Orten einer Druckmaschine vorhanden sind, wo es unterschiedliche akustische Bedingungen gibt. Durch die mehreren Mikrofonkapseln und die Leiterplatte mit den elektronischen Bauteilen zur Unterdrückung von Störgeräuschen kann nun jede Sprechstelle an die jeweilige akustische Umgebung der Druckmaschine angepasst werden.

Erfindungsgemäß ist weiterhin vorgesehen, dass die Mikrofoneinrichtung eine zentrale Mikrofonkapsel und mehrere auf einem Kreis um die zentral angeordnete Mikrofonkapsel herum angeordnete weitere Mikrofonkapseln aufweist. Die Mikrofonkapseln sind dabei bevorzugt äquidistant oder gleichmäßig verteilt angeordnet. Dabei erfasst die zentrale Mikrofonkapsel zusammen mit den darum herum angeordneten Mikrofonkapseln die Sprachkommunikation des Bedienpersonals, welche an die Leiterplatte mit den elektronischen Bauteilen weitergeleitet werden. Dort kann dann auf elektronischem Wege anhand der erfassten Störgeräusche die Sprachverständlichkeit der Sprachinformation erhöht werden, indem der Störanteil aus den Sprachinformationen herausgerechnet werden kann. Aus dem zeitlichen Versatz der Sprachsignale, die von den jeweiligen Mikrofonen empfangen werden, kann ein Algorithmus im Prozessor auf der Leiterplatte erkennen, von welchem Punkt der Bediener spricht. Damit kann der Algorithmus die Signale unterdrücken/abschwächen, die aus einer anderen Richtung als der des Bedieners kommen. Diese Signale können nämlich Störsignale sein oder zumindest keine Signale, die man verstärken und übertragen will. Dies wird auch als "Beamforming" bezeichnet. Zusätzlich kann man mit diesen Informationen die Unterdrückung der Störgeräusche verbessern. Durch diese Maßnahmen wird die Sprachverständlichkeit und damit die Kommunikation zwischen Bedienstellen erheblich verbessert.

In einer weiter verbesserten Ausgestaltung der vorliegenden Erfindung ist vorgesehen, dass die Mikrofonkapseln auf zwei oder mehr konzentrischen Kreisen angeordnet sind. Dies erlaubt eine noch bessere Erfassung des Störanteils der Sprachinformation und somit eine noch bessere Minimierung von Störgeräuschen.

Vorteilhafterweise ist vorgesehen, dass die auf einem Kreis angeordneten Mikrofonkapseln der Mikrofoneinrichtung ein regelmäßiges N-Eck bilden. Die Form des regelmäßigen N-Ecks hat den Vorteil, dass die Umgebungsgeräusche höher aufgelöst erfasst werden. Dadurch ist der Algorithmus im Prozessor auf der Leiterplatte in der Lage, noch genauer das Stör- vom Nutzsignal zu trennen. Die Anordnung auf den Eckpunkten eines regelmäßigen N-Ecks bewirkt zudem einen geringeren Rechenaufwand bei der Minimierung der Störgeräusche.

In einer weiteren Ausgestaltung der vorliegenden Erfindung ist vorgesehen, dass den Mikrofonkapseln der Gesamtschall bestehend aus Störschall und Sprachschall jeweils für jede Mikrofonkapsel über Schallkanäle akustisch voneinander getrennt zugeführt wird. Durch diese Schallkanäle wird vermieden, dass Mikrofonkapseln auch Sprachschall oder Umgebungsgeräusche zugeleitet werden, die örtlich eigentlich eher einer benachbarten Mikrofonkapsel zugehören würden. Durch die Schallkanäle kann so eine saubere akustische Trennung erreicht werden und dann bei der Entstörung durch die elektronischen Bauteile auf der Leiterplatte Sprachschall und Störgeräusche sauber voneinander getrennt werden. Die Schallkanäle können dabei mit einer Dichtmasse an den Kontaktflächen zu den Mikrofonkapseln abgedichtet sein, so dass der Schall zuverlässig durch die Kanäle zu den Mikrofonkapseln geleitet wird. Die Schallkanäle sind dabei vorzugsweise aus Kunststoff hergestellt. Der Kunststoff ist dabei vorzugsweise elastisch, so dass die Schallkanäle voneinander und zum Inneren des Gehäuses sauber abgedichtet sind.

In einer weiteren Ausgestaltung der vorliegenden Erfindung ist vorgesehen, dass die Schallkanäle nach Außen hin über eine perforierte Blende abgedeckt sind. Die perforierte Blende sorgt in Verbindung mit einem rückseitig aufgeklebten Vlies dafür, dass der in einer Druckerei vorhandene Schmutz nicht ungehindert in die Schallkanäle eindringen kann und schützt somit die Schallkanäle und die dahinter platzierten Mikrofonkapseln. Zudem erlaubt eine Blende eine nahtlose optische Integration in Gehäuse von Bedienstellen und Maschinen.

Weiterhin ist vorgesehen, dass die perforierte Blende bündig mit der Oberfläche des Gehäuses einer Bedienstelle der Bedruckstoffe verarbeitenden Maschine oder bündig mit einer Gehäusewand der Bedruckstoffe verarbeitenden Maschine abschließt. Mit dem bündigen Abschluss mit der Oberfläche einer Bedienstelle oder einer Gehäusewand ist eine besonders unauffällige Platzierung einer Mikrofoneinrichtung für eine Sprachstelle an diversen Orten einer Druckmaschine möglich. Die Sprechstelle verschwindet so optisch unauffällig unter der perforierten Blende und bildet somit einen Teil der Oberfläche des Gehäuses einer Bedienstelle oder einer Gehäusewand.

Vorteilhafterweise ist außerdem vorgesehen, dass die Leiterplatte wenigstens einen Prozessor aufweist, welcher die Schallsignale sprechender Personen entgegennimmt und Störgeräusche mittels Algorithmen zur Störgeräuschunterdrückung minimiert. Die elektronischen Bauteile auf der Leiterplatte umfassen dabei ein oder mehrere Prozessoren, welche eine Störgeräuschunterdrückung z. B. durch Automatic Noise Reduction (ANR) erlauben, um die von der Druckmaschine erzeugten lauten Störgeräusche zu unterdrücken. Der oder die Prozessoren sind dabei geeignet, mehrere Algorithmen zur Sprachverbesserung abzuarbeiten.

Deshalb ist in einer weiteren Ausgestaltung der Erfindung vorgesehen, dass der Prozessor durch Algorithmen zur akustischen Echokompensation die Sprachqualität im Duplexsprachbetrieb verbessert. Beim Duplexsprachbetrieb, d. h. beim gleichzeitigen Sprechen zweier miteinander kommunizierender Personen über die Sprechstellen, besteht immer die Gefahr, dass Echos entstehen. Diese können ebenfalls durch den Prozessor auf der Leiterplatte minimiert werden, indem dort ein Algorithmus zur akustischen Echokompensation eingesetzt wird.

Grundsätzlich bietet die vorliegende Erfindung den weiteren Vorteil, dass der Prozessor auf der Leiterplatte über eine parametrierbare Software zur Unterdrückung von Störgeräuschen oder Echos verfügen kann. Durch die Parametrierung können die Algorithmen zur Störgeräuschunterdrückung und Echokompensation individuell an die ortsabhängigen akustischen Problembereiche einer Druckmaschine und an das Betriebsumfeld angepasst werden. So können an einer Druckmaschine die Sprechstellen am Ausleger und am Anleger unterschiedlich parametriert werden, um den unterschiedlichen Geräuschverhältnissen gerecht werden zu können. Die vorliegende Erfindung wird nachfolgend anhand zweier Figuren näher beschrieben und erläutert. Es zeigen:
- Figur 1: eine Übersicht über zwei Sprechstellen mit erfindungsgemäßen Komponenten und
- Figur 2: eine Detailansicht einer Mikrofoneinrichtung einer Sprechstelle.

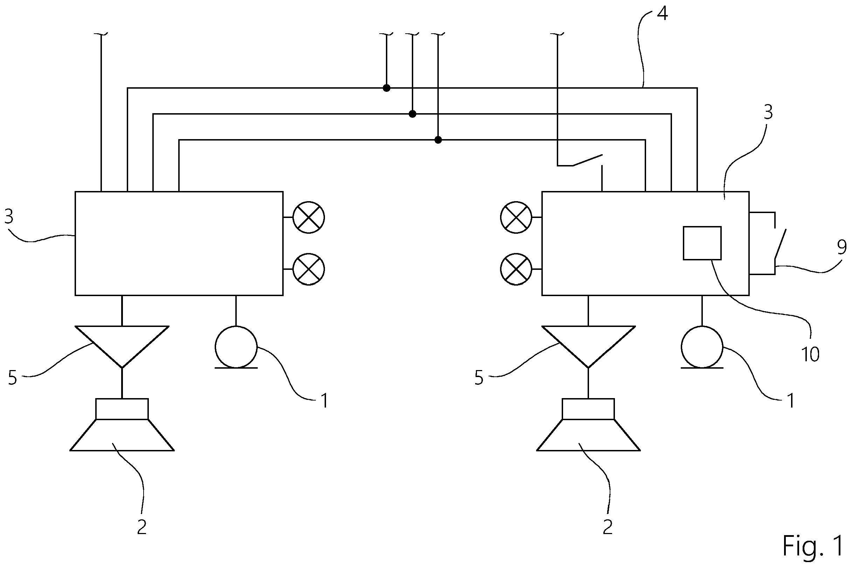

In Figur 1 sind zwei Sprechstellen 3 abgebildet, welches über ein Bussystem 4 miteinander verbunden sind. Bei dem Bussystem 4 kann es sich insbesondere um einen ART-Bus handeln. Die beiden Sprechstellen 3 sind dabei an unterschiedlichen Orten einer Druckmaschine angeordnet, z. B. am Ausleger und am Anleger der Druckmaschine. So kann Bedienpersonal vom Ausleger zum Anleger der Druckmaschine und umgekehrt kommunizieren, was im Hinblick auf den großen Lärm in einer Druckerei und insbesondere die große Entfernung zwischen Anleger und Ausleger bei langen Druckmaschinen notwendig ist. Jede Sprechstelle 3 verfügt dabei über einen Lautsprecher 2 sowie eine Mikrofonanordnung 1. Die Mikrofonanordnung 1 nimmt die Sprache des Bedienpersonals auf und leitet es an einen Verstärker 5 weiter. Dieser Verstärker 5 ist jeweils auf einer Leiterplatte 8 angebracht, welche zudem weitere elektronische Bauteile wie einen Prozessor 10 aufweist. Dieser Prozessor 10 kann die vom Verstärker 5 zugeleiteten Sprachsignale mit Hilfe von Algorithmen verarbeiten und dabei Algorithmen zur Störgeräuschunterdrückung und Echokompensation für den Duplexsprachbetrieb durchführen. Die Software des Prozessors 10 ist dabei parametrierbar ausgelegt und kann somit an den jeweiligen Einbauort einer Druckmaschine angepasst werden. Jede Sprechstelle 3 ist zudem mit einem Taster 9 ausgestattet, über dessen Betätigung das Bedienpersonal die Sprachübertragung starten und beenden kann. Zudem ist in den Taster 9 ein Potentiometer zur Lautstärkeregelung für einen Lautsprecher 2 integriert.

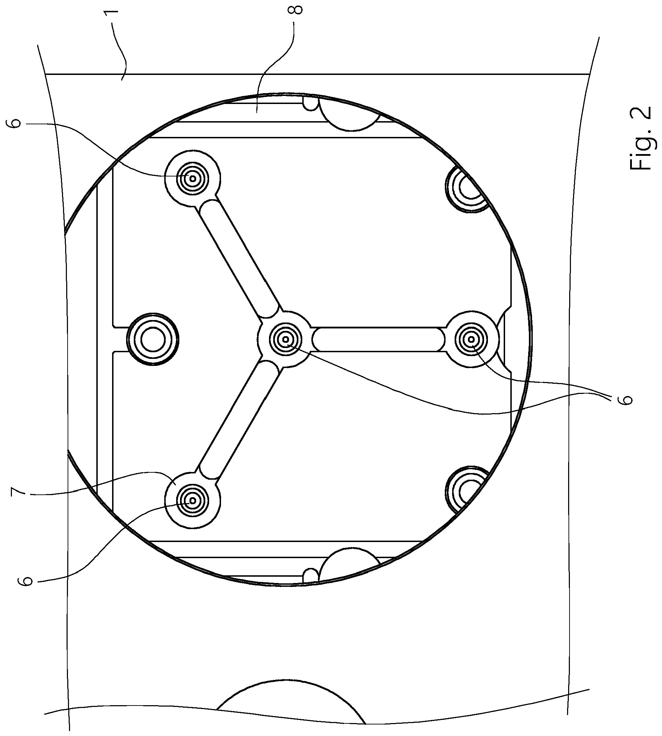

Figur 2 zeigt eine detaillierte Ansicht einer möglichen Mikrofonanordnung 1. Es ist zu erkennen, dass um eine zentrale Mikrofonkapsel 6 drei weitere Mikrofonkapseln 6 auf einem Kreis angeordnet sind, wobei die Mikrofonkapseln 6 ein regelmäßiges Dreieck um die zentrale Mikrofonkapsel 6 bilden. Die Mikrofonkapseln 6 sind auf einer Leiterplatte 8 montiert. Die Mikrofonkapseln 6 dazu da, den Sprachschall aufzunehmen. Durch die örtlich unterschiedlich angeordneten Mikrofonkapseln 6 ist es möglich, den Sprachschall von den Störgeräuschen zu separieren. Damit die Mikrofonkapseln 6 sauber akustisch voneinander getrennt sind, sind sie zur Oberfläche hin über Schallkanäle 7 gegeneinander abgedichtet. Weiterhin verjüngen sich die Schallkanäle trichterförmig in Richtung der Mikrofonkapseln 6. Dabei wird ein Bauteil formschlüssig eingelegt, welches die Schallkanäle 7 reproduzierbar vor der jeweiligen Mikrofonkapsel positioniert. Von Vorteil ist dabei ein elastisches Bauteil, um die Abdichtung der Schallkanäle 7 voneinander und zum Inneren des Gehäuses zu erleichtern. Die Funktion dieses Bauteils lässt sich z. B. mittels einer pastösen Raupe, einem Zuschnitt aus einer Platte oder einem Formteil umsetzen. Nach Außen hin sind die Schallkanäle 7 durch eine perforierte Blende mit einem rückseitig aufgeklebten Vlies abgedeckt, um vor Schmutz geschützt zu sein. Die Blende ist dabei akustisch passend perforiert.

Der Lautsprecher 2 in Figur 1 weist einen auf Sprache optimierten Frequenzgang auf. Um akustische Kurzschlüsse zwischen dem Außen- und Innenbereich der Sprechstelle 3 zu vermeiden, ist der Lautsprecher 2 auf einem Bauteil mit abdichtender Funktion montiert. Die Einstellung der Lautstärke des Lautsprechers 2 erfolgt vorteilhaft mit einem Encoder, welcher eine zusätzliche Tastfunktion aufweist, mit der die Kommunikation über den Taster 9 zu einer anderen Sprechstelle 3 gestartet und beendet werden kann. Die Sprechstellen 3 sind dabei mit einem digitalen 2-Draht-Bussystem wie z. B. Audio-RT (ART) verbunden. Auf diese Art und Weise können über das Bussystem 4 auch mehr als zwei Sprechstellen 3 miteinander verbunden werden.

### Bezugszeichenliste

- 1: Mikrofonanordnung
- 2: Lautsprecher
- 3: Sprechstelle
- 4: Bussystem
- 5: Verstärker
- 6: Mikrofonkapsel
- 7: Schallkanäle
- 8: Leiterplatte
- 9: Taster
- 10: Prozessor

## Patentansprüche

1. Kommunikationseinrichtung für gleichzeitige bidirektionale Sprachkommunikation zwischen wenigstens zwei Sprechstellen (3) an einer Bedruckstoffe verarbeitenden Maschine, wobei die Sprechstellen (3) über ein Bussystem (4) miteinander verbunden sind,
**dadurch gekennzeichnet,**
**dass** jede Sprechstelle (3) wenigstens einen Lautsprecher (2) und eine Mikrofoneinrichtung (1) mit mehreren Mikrofonkapseln (6) sowie eine Leiterplatte (8) mit elektronischen Bauteilen zur Verbesserung der Sprachverständlichkeit bei der Sprachkommunikation zwischen den Sprechstellen (3) aufweist.

2. Kommunikationseinrichtung nach Anspruch 1,
**dadurch gekennzeichnet,**
**dass** die Mikrofoneinrichtung (1) eine zentrale Mikrofonkapsel (6) und mehrere auf einem Kreis um die zentral angeordnete Mikrofonkapsel (6) herum angeordnete weitere Mikrofonkapseln (6) aufweist.

3. Kommunikationseinrichtung nach Anspruch 1,
**dadurch gekennzeichnet,**
**dass** die Mikrofonkapseln (6) auf zwei oder mehr konzentrischen Kreisen angeordnet sind.

4. Kommunikationseinrichtung nach Anspruch 2 oder 3,
**dadurch gekennzeichnet,**
**dass** die auf einem Kreis oder mehreren konzentrischen Kreisen angeordneten Mikrofonkapseln (6) der Mikrofoneinrichtung (1) regelmäßige N-Ecke bilden.

5. Kommunikationseinrichtung nach einem der vorhergehenden Ansprüche,
**dadurch gekennzeichnet,**
**dass** den Mikrofonkapseln (6) der Gesamtschall bestehend aus Sprachschall und Störschall über Schallkanäle (7) jeweils für jede Mikrofonkapsel (6) akustisch voneinander getrennt zugeführt wird.

6. Kommunikationseinrichtung nach Anspruch 5,
**dadurch gekennzeichnet,**
**dass** die Schallkanäle (7) nach außen hin über eine perforierte Blende abgedeckt sind.

7. Kommunikationseinrichtung nach Anspruch 6,
**dadurch gekennzeichnet,**
**dass** die perforierte Blende bündig mit der Oberfläche des Gehäuses einer Bedienstelle (3) der Bedruckstoffe verarbeitenden Maschine oder bündig mit einer Gehäusewand der Bedruckstoffe verarbeitenden Maschine abschließt.

8. Kommunikationseinrichtung nach einem der vorhergehenden Ansprüche,
**dadurch gekennzeichnet,**
**dass** die Leiterplatte (8) wenigstens einen Prozessor aufweist, welcher die Schallsignale sprechender Personen entgegennimmt und Störgeräusche mittels Algorithmen zur Störgeräuschunterdrückung minimiert.

9. Kommunikationseinrichtung nach Anspruch 8,
**dadurch gekennzeichnet,**
**dass** der wenigstens eine Prozessor durch Algorithmen zur akustischen Echokompensation die Sprachqualität im Duplexsprachbetrieb verbessert.

10. Kommunikationseinrichtung nach einem der Ansprüche 8 oder 9,
**dadurch gekennzeichnet,**
**dass** der wenigstens eine Prozessor eine parametrierbare Software zur Unterdrückung von Störgeräuschen oder Echos aufweist.
